# EUROPEAN PATENT APPLICATION

(11) **EP 2 047 968 A1**
(43) Date of publication of application: **15.04.2009**
(21) Application number: 07745049.2
(22) Date of filing: 11.06.2007
(51) Int. Cl.: B29C 59/04

(54) **PROCESS FOR PRODUCING MOLD**

(30) Priority: 03.08.2006 JP 2006211906
(71) Applicant: Asahi Glass Company, Limited, Chiyoda-ku Tokyo 100-8405 (JP)
(72) Inventor: KAWAGUCHI, Yasuhide, Tokyo 100-8405 (JP); ASAKAWA, Akihiko, Tokyo 100-8405 (JP); NONAKA, Fumiko, Tokyo 100-8405 (JP)
(74) Representative: Müller-Boré & Partner Patentanwälte
(86) International application number: PCT/JP2007/061760
(87) International publication number: WO 2008/015842

(57) **Abstract**

To provide a process for producing a hollow cylindrical or solid cylindrical mold having a seamless patterned layer comprising a fluoropolymer.

A process for producing a mold comprising a hollow cylindrical or solid cylindrical substrate 12 and a patterned layer comprising a fluoropolymer and having a pattern formed on its surface, which comprises a step of forming a film 32 comprising a fluoropolymer so as to cover the circumferential surface of the substrate 12 thereby to obtain a mold precursor 30; and a step of rolling the mold precursor 30 in such a state that the circumferential surface of the mold precursor 30 is pushed against a surface of a heated original mold 40 having a pattern reverse to the pattern of the patterned layer, to transfer the reversal pattern of the original mold 40 to the film 32 comprising a fluoropolymer to form the patterned layer.

## Description

### TECHNICAL FIELD

The present invention relates to a process for producing a mold.

### BACKGROUND ART

As a process for forming a fine pattern, a so-called nano imprinting method is known which is a process for forming a desired fine pattern on a film made of a liquid photocurable resin, wherein the photocurable resin is irradiated with light to cure the photocurable resin, in a state where a mold having a pattern reversed of the desired fine pattern, is pushed against it (cf. Patent Documents 1 to 3).

Recently, a method for continuously forming a fine pattern by using a hollow cylindrical mold is suggested wherein a film comprising a fluoropolymer, etc. and having a pattern formed on its surface, is wound around the cylinder (Patent Documents 4 and 5).

However, in the hollow cylindrical mold, a seam is formed between the beginning and the end of the wound film. Therefore, there are problems such that (i) no pattern can be formed at the seam portion or around the seam portion, and since the seam portion and around the seam portion cannot be used for forming a fine pattern, the efficiency of forming a fine pattern will decrease, and (ii) convexoconcave derived from the seam may be formed along with a fine pattern.
Patent Document 1: JP-A-2005-515617
Patent Document 2: JP-A-2005-288803
Patent Document 3: WO2003/084727
Patent Document 4: JP-A-2006-037057
Patent Document 5: U.S. Patent Application Publication No. 2006/0021533

### DISCLOSURE OF THE INVENTION

### OBJECT TO BE ACCOMPLISHED BY THE INVENTION

The present invention provides a process for producing a hollow cylindrical or solid cylindrical mold having a seamless patterned layer comprising a fluoropolymer.

### MEANS TO ACCOMPLISH THE OBJECT

Namely, the present invention provides the following.
(1) A process for producing a mold comprising a hollow cylindrical or solid cylindrical substrate and a patterned layer comprising a fluoropolymer and having a pattern formed on its surface, which comprises a step of forming a film comprising a fluoropolymer so as to cover the circumferential surface of the hollow cylindrical or solid cylindrical substrate thereby to obtain a mold precursor; and a step of rolling the mold precursor in such a state that the circumferential surface of the mold precursor is pushed against a surface of a heated original mold having a pattern reverse to the pattern of the patterned layer, to transfer the reversal pattern of the original mold to the film comprising a fluoropolymer to form the patterned layer.
(2) The process for producing a mold according to the above (1), which has a step of forming an antistatic layer so as to cover the circumferential surface of the substrate before the film comprising a fluoropolymer is formed.
(3) The process for producing a mold according to the above (2), which has a step of forming a first primer layer so as to cover the circumferential surface of the substrate before the antistatic layer is formed.
(4) The process for producing a mold according to the above (2) or (3), which has a step of forming a second primer layer so as to cover the antistatic layer.
(5) The process for producing a mold according to any one of the above (1) to (4), wherein the fluoropolymer is a fluorocyclic polymer or a fluoropolyether polymer.
(6) The process for producing a mold according to the above (5), wherein the fluoropolymer has a fluoroalicyclic structure in its main chain.
(7) The process for producing a mold according to any one of the above (1) to (6), wherein the fluoropolymer is a perfluoropolymer, wherein the ratio of the number of fluorine atoms bonded to carbon atoms to the total number of hydrogen atoms bonded to carbon atoms and fluorine atoms bonded to carbon atoms, is 100%.
(8) The process for producing a mold according to any one of the above (1) to (7), wherein the film comprising a fluoropolymer is formed by applying a solution having a fluoropolymer dissolved in a solvent, and drying the applied film.
(9) A mold produced by the process for producing a mold as defined in any one of the above (1) to (8).
(10) A process for forming a desired fine pattern on a film made of a liquid photocurable resin formed on a base, wherein the photocurable resin is irradiated with light to cure the photocurable resin in a state where the patterned layer of the mold as defined in the above (9), is pushed against the film.

### EFFECT OF THE INVENTION

According to the process for producing a mold of the present invention, it is possible to produce a hollow cylindrical or solid cylindrical mold having a seamless patterned layer comprising a fluoropolymer.

### BRIEF DESCRIPTION OF DRAWINGS

Fig. 1 is a cross-sectional view illustrating an embodiment of a mold which can be obtained by the production process of the present invention.
Fig. 2 is an enlarged view illustrating the layer structure of the mold of Fig. 1.
Fig. 3 is a cross-sectional view illustrating an embodiment of a mold precursor which can be obtained in the middle of the production of a mold.
Fig. 4 is a cross-sectional view illustrating one step in the process for producing a mold of the present invention.
Fig. 5 is an enlarged view illustrating a state where the mold precursor is pushed against an original mold.
Fig. 6 is a cross-sectional view illustrating an embodiment of a process for forming a fine pattern.
Fig. 7 is a front view illustrating the original mold used in Examples of the present invention.

### MEANINGS OF SYMBOLS

- 10:: Mold
- 12:: Substrate
- 14:: Pattern
- 16:: Patterned layer
- 18:: Antistatic layer
- 20:: First primer layer
- 22:: Second primer layer
- 30:: Mold precursor
- 32:: Film comprising fluoropolymer
- 40:: Original mold
- 42:: Reverse pattern
- 50:: support substrate
- 52:: Film made of photocurable resin
- 70:: Light source

### BEST MODE FOR CARRYING OUT THE INVENTION

In the present specification, a compound represented by a formula (1) is referred to as a compound (1). The same applies to compounds represented by other formulae.

In the present specification, a (meth)acryloyl group means an acryloyl group and/or a methacryloyl group, (meth)acrylate means acrylate and/or methacrylate, and (meth)acrylic acid means acrylic acid and/or methacrylic acid.

### MOLD

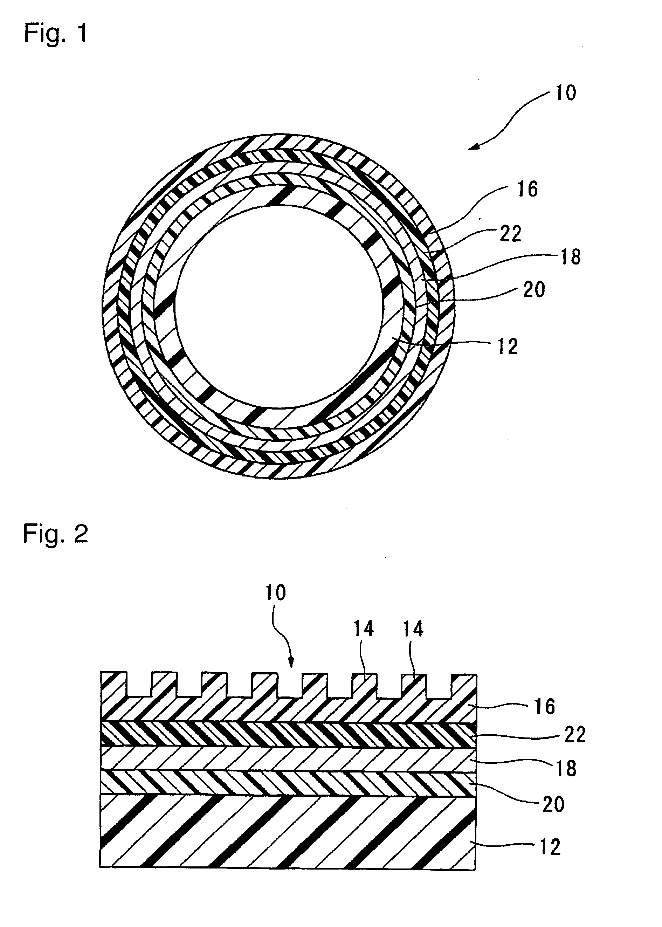

Fig. 1 is a cross-sectional view illustrating an embodiment of a mold which can be obtained by the production process of the present invention, and Fig. 2 is an enlarged view illustrating its layer structure. A mold 10 comprises a hollow cylindrical substrate 12 and a patterned layer 16 comprising a fluoropolymer and having a pattern 14 formed on its surface.

The mold 10 may have, as shown in Fig. 1 and Fig. 2, an antistatic layer 18 disposed between the substrate 12 and the patterned layer 16; a first primer layer 20 disposed between the substrate 12 and the antistatic layer 18; and a second primer layer 22 disposed between the antistatic layer 18 and the patterned layer 16.

### SUBSTRATE

The form of the substrate is a hollow cylinder or a solid cylinder.

As the material for the substrate, the following materials may be mentioned.

Glass: Quartz glass, borosilicate glass, etc.

Carbon compound: Silicon carbide, black glassy carbon and graphite.

Metal: Nickel, copper, etc.

Cellulose material: Paper, etc.

Resin: Polyester (polyethylene terephthalate (PET), polyethylene naphthalate, etc.), polyvinyl alcohol, acryl resin, polyamide, polyimide, cellophane, polycarbonate, flexible polyvinyl chloride resin, hard polyvinyl chloride resin, fluororesin, silicone resin, etc.

Rubber: Fluororubber, etc.

The material for the substrate is preferably a material having a transmittance of ultraviolet rays with a wavelength of about 365 nm being at least 65% when its thickness is 100 µm, and glass, a fluororesin, PET, a silicone resin, an acrylic resin, etc. may be mentioned. When a substrate which is opaque to ultraviolet rays is used, the after-mentioned support substrate on the side to be processed, will be limited to a material which is transparent to ultraviolet rays.

The material for the substrate is particularly preferably glass, PET, an acrylic resin or polyimide, from the viewpoint that the adhesion with other layers is good.

The thickness of the substrate is preferably from 20 to 5,000 µm, more preferably from 100 to 1,000 µm.

As the substrate, it is permitted to use a substrate which is preliminarily subjected to surface treatment such as plasma treatment, corona discharging, ultraviolet irradiation, vacuum ultraviolet irradiation, electron beam irradiation, ultraviolet ozone treatment or ion irradiation. By using such a substrate, it is possible to omit the first primer layer.

### PATTERNED LAYER

As a pattern, a fine pattern made of a concavo-convex structure is preferred.

A convex portion in the concavo-convex structure is a longitudinal convex extending on the surface of a patterned layer or protrusions dotted on the surface of the patterned layer.

A concave portion in the concavo-convex structure is a longitudinal groove extending on the surface of patterned layer or pores dotted on the surface of the patterned layer.

The shape of the convex or the groove may, for example, be a straight line, a curve or a bent line. A plurality of convexes or grooves may be present in parallel with one another to form stripes.

The cross-sectional shape of the convex or the groove in a direction at right angle to the longitudinal direction may, for example, be rectangular, trapezoidal, triangular or semi-circular.

The shape of the protrusions or the pores may be triangular prism, quadrangular prism, hexagonal column, cylindrical column, triangular pyramid, quadrangular pyramid, six-sided pyramid, circular cone-hemisphere or polyhedron.

The width of the convex or the groove is preferably from 1 nm to 500 µm on an average, more preferably from 10 nm to 300 µm, particularly preferably from 50 nm to 400 nm. The width of the convex means the length of the base in the cross section in a direction at right angle to the longitudinal direction. The width of the groove means the length of the upper side in the cross section in a direction at right angle to the longitudinal direction.

The width of the protrusions or the pores is preferably from 1 nm to 500 µm on an average, more preferably from 10 nm to 300 µm, particularly preferably from 50 nm to 400 nm. The width of the protrusions means, in a case where the bottom face is elongated, the length of the base in the cross section in a direction at right angle to the longitudinal direction, and in other cases, the maximum length at the bottom face of the protrusions. The width of the pores means, in a case where the opening is elongated, the length of the upper side in the cross section in a direction at right angle to the longitudinal direction, and in other cases, the maximum length at the opening of the protrusions.

The height of the convex portion is preferably from 1 nm to 500 µm on an average, more preferably from 10 nm to 300 µm, particularly preferably from 10 nm to 10 µm, most preferably from 50 nm to 400 nm.

The depth of the concave portion is preferably from 1 nm to 500 µm on an average, more preferably from 10 nm to 300 µm, particularly preferably from 10 nm to 10 µm, most preferably from 50 nm to 400 nm.

In a region where the concavo-convex structure is present at high density, the distance between adjacent convex portions (or concave portions) is preferably from 1 nm to 500 µm on an average, particularly preferably from 10 nm to 300 µm. The distance between adjacent convex portions means a distance from the terminal of the base in the cross section of a convex portion to the start point of the base in the cross section of the adjacent convex portion. The distance between adjacent concave portions means a distance between the terminal of the upper side in the cross section of a concave portion and the start point of the upper side in the cross section of the adjacent concave portion.

The minimum dimension of the convex portion is preferably from 1 nm to 500 µm, particularly preferably from 50 nm to 500 nm. The minimum dimension means the minimum dimension among the width, the length and the height of the convex portion.

The minimum dimension of the concave portion is preferably from 1 nm to 500 µm, particularly preferably from 50 nm to 500 nm. The minimum dimension means the minimum dimension among the width, the length and the depth of the concave portion.

The thickness of the patterned layer is preferably at least the highest height of the convex portion.

The patterned layer is a layer comprising a fluoropolymer.

The fluoropolymer is preferably a polymer which contains at least 35 mass% of fluorine in 100 mass% of a fluororesin, from the viewpoint of excellent releasing property, and in which the contact angle of water with a film made of the fluoropolymer is at least 80°.

The contact angle of water is measured with respect to a coated film made of the fluoropolymer by using a contact angle meter.

As the fluoropolymer, the following polymers may be mentioned.

A tetrafluoroethylene/perfluoro(alkyl vinyl ether) copolymer, a tetrafluoroethylene/ethylene copolymer, a tetrafluoroethylene/hexafluoropropylene copolymer, a vinylidene fluoride/tetrafluoroethylene/hexafluoropropylene copolymer, a fluorocyclic polymer, a fluoroalkylene polymer, a fluoropolyether polymer, etc.

The fluoropolymer is preferably a fluorocyclic polymer or a fluoropolyether polymer, more preferably a fluorocyclic polymer from the viewpoint that the transmittance for light having a wavelength of from 200 to 500 nm and durability are excellent.

The fluorocyclic polymer is a fluoropolymer having a fluoroalicyclic structure in its main chain, wherein at least one carbon atom constituting the ring of the fluoroaliphatic ring, is the carbon atom constituting the main chain of the fluoropolymer. The carbon atoms in the main chain are derived from two carbon atoms in a polymerizable double bond of a cyclic monomer constituting the fluoropolymer, or they are derived from four carbon atoms in two polymerizable double bonds in a case of a fluoropolymer obtained by cyclopolymerization of a diene monomer having two polymerizable double bonds. As atoms to constitute a ring of the fluoroaliphatic ring, an oxygen atom, an nitrogen atom, etc. may be contained other than the carbon atoms. The fluoroaliphatic ring is preferably a fluoroaliphatic ring having from 1 to 2 oxygen atoms. The number of atoms constituting the fluoroaliphatic ring is preferably from 4 to 7.

As the polymerizable double bond, a vinyl group, an allyl group or a (meth)acryloyl group is preferred.

The fluorocyclic polymer may, for example, be a homopolymer or a copolymer of a cyclic monomer, or a homopolymer or a copolymer obtained by cyclopolymerization of a diene monomer.

The cyclic monomer is a monomer having a polymerizable double bond between carbon atoms constituting the fluoroaliphatic ring, or a monomer having a polymerizable double bond between a carbon atom constituting the fluoroaliphatic ring and a carbon atom outside of the fluoroaliphatic ring.

The diene monomer is a monomer having two polymerizable double bonds.

Each of the cyclic monomer and the diene monomer is a monomer having fluorine atoms, preferably a monomer
wherein the ratio of the number of fluorine atoms bonded to carbon atoms to the total number of hydrogen atoms bonded to carbon atoms and fluorine atoms bonded to carbon atoms, is at least 80%, more preferably a perfluoromonomer wherein the ratio is 100%.

Each of the cyclic monomer and the diene monomer may be a perhalopolyfluoromonomer having from 1 to 4 fluorine atoms of a perfluoromonomer are substituted by chlorine.

A monomer to be copolymerized with the cyclic monomer or with the diene monomer, is also preferably a perfluoromonomer or a perhalopolyfluoromonomer.

The cyclic monomer is preferably a compound (1) or a compound (2). 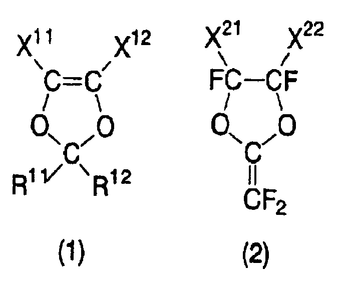 wherein each of X¹¹, X¹², R¹¹ and R¹² is independently a fluorine atom, a C₁₋₄ perfluoroalkyl group or a C₁₋₄ perfluoroalkoxy group. X¹¹ is preferably a fluorine atom. X¹² is preferably a fluorine atom, a trifluoromethyl group or a C₁₋₄ perfluoroalkoxy group.

Each of X²¹ and X²² is independently a fluorine atom or a C₁₋₇ perfluoroalkyl group. Each of X²¹ and X²² is preferably a fluorine atom or a trifluoromethyl group.

Specific examples of the compound (1) may be compounds (1-1) to (1-3).

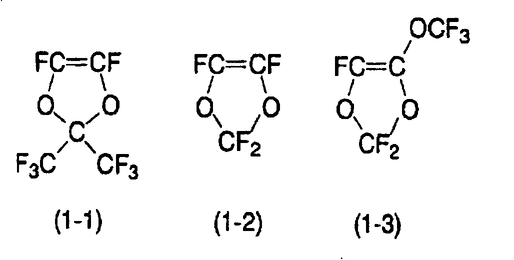

Specific examples of the compound (2) may be compounds (2-1) and (2-2).

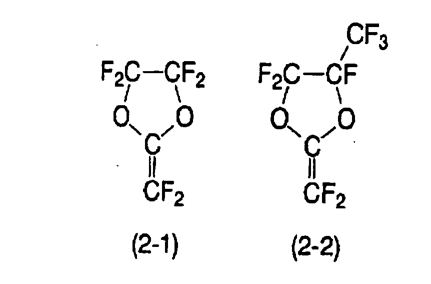

The monomer to be copolymerized with the cyclic monomer may, for example, be CF₂=CF₂, CF₂=CFCl or CF₂=CFOCF₃.

The diene monomer is preferably a compound (3):

CF₂=CF-Q-CF=CF₂ (3)

wherein Q is a C₁₋₃ perfluoroalkylene group which may have an etheric oxygen atom. In the case of a perfluoroalkylene group having an etheric oxygen atom, the etheric oxygen atom in the perfluoroalkylene group may be present at one terminal of the group, may be present at both terminals of the group, or may be present between carbon atoms of the group. From the viewpoint of cyclopolymerization property, it is preferably present at one terminal of the group.

By cyclopolymerization of the compound (3), it is possible to obtain a polymer having repeating units of the following formulae (3-1) to (3-3).

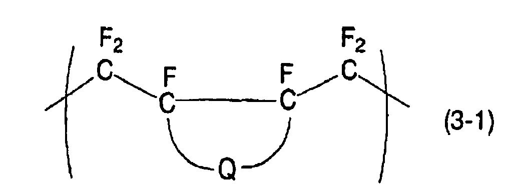

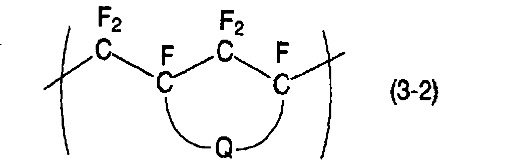

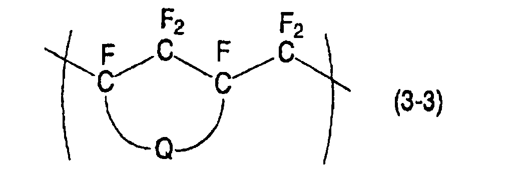

The diene monomer may, for example, be the following compound.

CF₂=CFOCF₂CF=CF₂,

CF_{Z}=CFOCF(CF₃) CF=CF₂,

CF₂=CFOCF₂CF₂CF=CF₂,

CF₂=CFOCF₂CF(CF₃) CF=CF₂,

CF₂=CFOCF (CF₃) CF₂CF=CF₂,

CF₂=CFOCF₂OCF=CF₂,

CF₂=CFOC(CF₃)₂OCF=CF₂,

CF₂=CFCF₂CF=CF₂ or

CF₂=CFCF₂CF₂CF=CF₂.

The monomer to be copolymerized with the diene monomer may, for example, be CF₂=CF₂, CF₂=CFCl or CF₂=CFOCF₃.

The fluorocyclic polymer preferably contains at least 20 mol% of repeating units having a fluoroalicyclic structure, more preferably contains at least 40 mol% of the repeating units, based on the total repeating units (100 mol%). The fluorocyclic polymer is particularly preferably made solely of repeating units having a fluoroalicyclic structure. The repeating units having a fluoroalicyclic structure are repeating units formed by polymerization of the cyclic monomer or repeating units formed by cyclopolymerization of the diene monomer.

The fluoroalkylene polymer is a fluoropolymer obtained by polymerizing a compound having a polyfluoroalkylene chain and a polymerizable group.

The polyfluoroalkylene chain is preferably a C₂₋₂₄ polyfluoroalkylene group. The polyfluoroalkylene group may contain a cycloalkylene group or may have a functional group.

The polymerizable group is preferably a vinyl group, an allyl group, a (meth)acryloyl group, an epoxy group, a dioxetane group, a cyano group, an isocyanate group or a hydrolysable silyl group represented by the following formula (4):

-(CH₂)ₐSi(M¹)_{3-b}(M²)_{b} (4)

wherein M¹ is a group to be converted to a hydroxyl group by a hydrolysis reaction. The group may, for example, be a halogen atom, an alkoxy group or an acyloxy group. The halogen atom is preferably a chorine atom. The alkoxy group is preferably a methoxy group or an ethoxy group, more preferably a methoxy group. M¹ is preferably an alkoxy group, more preferably a methoxy group.

M² is a monovalent hydrocarbon group. M² may, for example, be an alkyl group, an alkyl group substituted with at least one aryl group, an alkenyl group, an alkynyl group, a cycloalkyl group or an aryl group, and an alkyl group or an alkenyl group is preferred.
a is an integer of from 1 to 3, and 3 is preferred.
b is 0 or an integer of from 1 to 3, an 0 is preferred.

The compound having a polyfluoroalkylene chain and a polymerizable group may, for example, be the following compound.

CH₂=CHCOOCH₂CH₂(CF₂)₈F,

CH₂=CHCOOCH₂CH₂(CF₂)₆F,

CH₂=C(CH₃)COOCH₂CH₂(CF₂)₈F,

CH₂=C(CH₃)COOCH₂CH₂(CF₂)₆F,

CH₂=CHCOOCH₂(CF₂)₆F,

CH₂=C(CH₃)COOCH₂(CF₂)₆F,

CH₂=CHCOOCH₂CF₂CF₂H,

CH₂=CHCOOCH₂(CF₂CF₂)₂H,

CH₂=C(CH₃)COOCH₂(CF₂CF₂)H,

CH₂=C(CH₃)COOCH₂(CF₂CF₂)₂H,

CH₂=CFCOOCH₂CH(OH) CH₂(CF₂)₆CF(CF₃)₂,

CH₂=CFCOOCH₂CH(OH)CH₂(CF₂)₆CF(CF₃)₂,

CH₂=CHCOOCH₂CH₂(CF₂CF₂)₃CH₂CH₂COCOCH=CH₂,

CH₂=C(CH₃)COOCH₂CH₂(CF₂CF₂)₃CH₂CH₂COCOC(CH₃)=CH₂,

CH₂=CHCOOCH₂CyFCH₂OCOCH=CH₂ or

CH₂=C(CH₃)COOCH₂Cy^{F}CH₂OCOC(CH₃) =CH₂.

Cy^{F} represents a perfluoro(1,4-cyclohexylene) group.

A fluoropolyether polymer is a fluoropolymer obtained by polymerizing a compound (hereinafter referred to as a compound (f)) having a perfluoro(polyoxyalkylene) chain and a polymerizable group.

The perfluoro(polyoxyalkylene) chain is preferably made of at least one type of perfluoro(oxyalkylene) unit selected from the group consisting of (CF₂CF₂O) unit, (CF₂CF(CF₃)O) unit, (CF₂CF₂CF₂O) unit and (CF₂O) unit, more preferably made of (CF₂CF₂O) unit, (CF₂CF(CF₃)O) unit or (CF₂CF₂CF₂O) unit, particularly preferably made of (CF₂CF₂O) unit from the viewpoint that physical properties (heat resistance, acid resistance, etc.) of the fluoropolymer are excellent.

The number of perfluoro(oxyalkylene) units contained in the compound (f) is preferably an integer of from 2 to 200, more preferably an integer of from 5 to 50, from the viewpoint that the releasing property and the hardness of the fluoropolymer are high.

The polymerizable group is preferably a vinyl group, an allyl group, a (meth)acryloyl group, an epoxy group, a dioxetane group, a cyano group, an isocyanate group or a hydrolysable silyl group represented by the above formula (4), more preferably a (meth)acryloyl group.

The number of the polymerizable groups contained in the compound (f) is preferably an integer of from 1 to 4, from the viewpoint that the polymerization property is excellent, more preferably an integer of from 2 to 4, particularly preferably 3 or 4, from the viewpoint that the hardness, etc., of the fluoropolymer are excellent. When two types or more of the compound (f) are used in combination, the average number of the polymerizable groups is preferably from 1 to 3.

The compound (f) is preferably compounds (f1) to (f4), more preferably a compound (f1).

(Z¹-CH₂CF₂O(CF₂CF₂O)_{y1})ₐ₁Y¹ (f1)

(Z²-CH₂CF₂O(CF₂CF₂O)_{y2}·(CF₂O)_{g2})ₐ₂Y² (f2)

(Z³-CH₂CF₂O(CF(CF₃)CF₂O)_{y3}·(CF₂O)_{g3})ₐ₃Y³ (f3)

or

(Z⁴-CH₂CF₂O(CF₂CF₂CF₂O)_{y4}·(CF₂O)_{g4})ₐ₄Y⁴ (f4)

wherein "·" means that the order of two units is not particularly limited.

Each of y1, y2, y3 and y4 is independently an integer of from 1 to 100, preferably an integer of from 5 to 50.

Each of g2, g3 and g4 is independently an integer of from 1 to 100.

Each of a1, a2, a3 and a4 is independently an integer of from 1 to 4, preferably an integer of from 2 to 4, particularly preferably 3 or 4.

Y¹ is an a1 valent linking group, Y² is an a2 valent linking group, Y³ is an a3 valent linking group and Y⁴ is an a4 valent linking group. Each of a1, a2, a3 and a4 has the same meaning as above.

As Y¹ to Y⁴ being a divalent linking group, -CF₂CF₂-, etc. may be mentioned.

As Y¹ to Y⁴ being a trivalent linking group, the following linking groups may be mentioned.

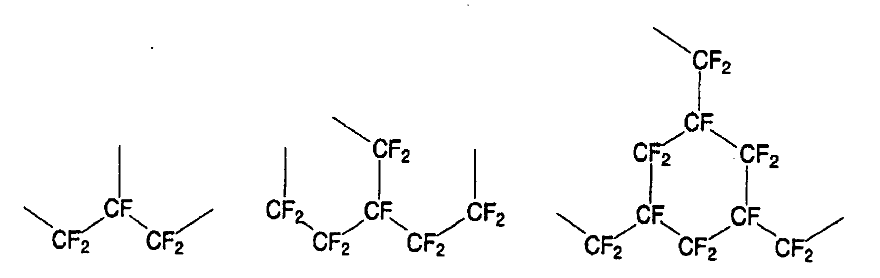

As Y¹ to Y⁴ being a tetravalent linking group, the following linking groups may be mentioned.

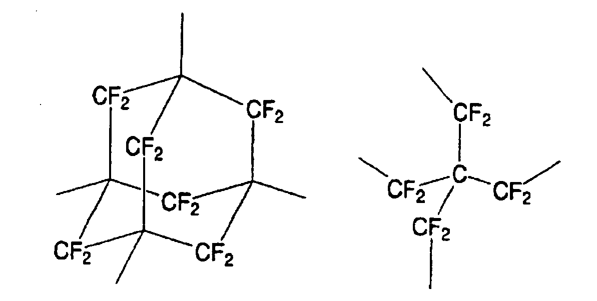

Each of Z¹, Z², Z³ and Z⁴ is independently a group represented by the following formula (5), and W is preferred.

W-(OCH₂CH₂)_{c}·(OCH₂CH(OW)CH₂)_{d}- (5)

wherein each of c and d is independently 0 or an integer of from 1 to 100, and 0 is preferred.

W is a group represented by the following formulae (5-1) to (5-5).

CH₂=CHCOO(CH₂)ₕ₁-Q¹- (5-1)

CH₂=CFCOO (CH₂) ₕ₂-Q²- (5-2)

CH₂=C(CH₃)COO(CH₂)ₕ₃-Q³- (5-3)

CH₂=C(CF₃)COO(CH₂)ₕ₄-Q⁴- (5-4)

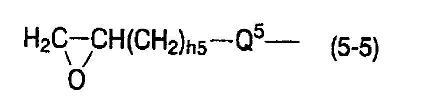

wherein each of h1, h2, h3, h4 and h5 is independently 0 or an integer of from 1 to 10.

Each of Q¹, Q², Q³ and Q⁴ is independently a single bond, -COO- or -NHCOO-. When h1 is 0, Q¹ is a single bond; when h2 is 0, Q² is a single bond; when h3 is 0, Q³ is a single bond; and when h4 is 0, Q⁴ is a single bond. Q⁵ is an etheric oxygen atom or -COO-.

The fluoropolymer is preferably a perfluoropolymer (F) wherein the ratio of the number of fluorine atoms bonded to carbon atoms to the total number of hydrogen atoms bonded to carbon atoms and fluorine atoms bonded to carbon atoms, is 100%, from the viewpoint that the releasing property is excellent, and it is preferably an amorphous or noncrystalline perfluoropolymer (F) from the viewpoint that the coating property is excellent. The perfluoropolymer (F) can be produced, for example, by polymerizing the perfluoromonomer in the presence of a polymerization initiator.

When the second primer layer is not provided, the fluoropolymer is particularly preferably a perfluoropolymer (F1) having a reactive functional group or a mixture of the perfluoropolymer (F1) and a perfluoropolymer (F2) which will be described later, from the viewpoint of the adhesion with other layers.

The contact angle of water with the perfluoropolymer (F1) or the mixture is preferably at least 80° and less than 105°.

The reactive functional group may, for example, be a carboxy group, a sulfonic group, a group having an ester bond, a hydroxyl group, an amino group, a cyano group or an isocyanate group, and a carboxy group is preferred. For example, in a case of the perfluoropolymer (F1) having a carboxy group, it can be produced in such a manner that a perfluoropolymer (F) having a functional group derived from a polymerization initiator, etc. as a terminal group, is heated in an oxygen atmosphere, followed by dipping in water to convert the functional group to a carboxyl group.

When the second primer layer is provided, the fluoropolymer is particularly preferably the perfluoropolymer (F2) having a reactive functional group fluorinated, which is obtained by treating the perfluoropolymer (F1) with a fluorine gas, from the viewpoint that the releasing property is excellent.

The contact angle of water with the perfluoropolymer (F2) is preferably at least 105°.

### ANTISTATIC LAYER

The antistatic layer is a layer containing a conductive compound. When the antistatic layer is excellent in adhesion with a substrate or the patterned layer, it may serve also as a primer layer.

The surface resistance of the conductive compound itself is preferably at most 10⁸ Ω/□, more preferably at most 10⁶ Ω/□

The surface resistance of the antistatic layer is preferably at most 10¹¹ Ω/□, more preferably at most 10^{9.5} Ω/□.

The surface resistance of the patterned layer provided on the antistatic layer is preferably at most 10¹⁶ Ω/□, more preferably at most 10¹³ Ω/□.

The conductive compound may, for example, be the following compound.

Metal oxide: Niobium-doped tin oxide, phosphorus-doped tin oxide, antimony-doped tin oxide (ATO), indium oxide, tin-doped indium oxide (ITO), zinc oxide, aluminum-doped zinc oxide, indium-doped zinc oxide, zinc antimonate, antimony pentoxide, etc.

Conductive polymer: Aliphatic conjugated polyacetylene, aromatic conjugated poly(paraphenylene), heterocyclic conjugated polypyrrole, polythiophene, heteroatom-containing conjugated polyaniline, combined conjugated poly(phenylene vinylene), etc.

Conductive carbon material: Carbon powder (carbon nanotube, carbon black, Ketjenblack, acetylene black, etc.), carbon fiber (polyacrylonitrile carbon fiber, pitch carbon fiber, etc.), carbon flakes as pulverized product of expanded black lead, etc.

Metal material: Powder of metal (aluminum, copper, gold, silver, nickel, chromium, iron, molybdenum, titanium, tungsten, tantalum, etc.) or powder of an alloy containing such metal, metal flakes, metal fiber (iron, copper, stainless steel, silver-plated copper, brass, etc.) etc.

The conductive compound is preferably the metal oxide or the conductive polymer from the viewpoint of adhesion with other layers, and it is more preferably polythiophene or ITO from the viewpoint of the transmittance of ultraviolet rays having a wavelength of about 365 nm.

The content of a heteroatom doped in a metal oxide is preferably from 0.01 to 30 mol%, more preferably from 0.1 to 10 mol% based on the metal oxide (100 mol%).

The content of the conductive compound is preferably from 30 to 100 mass%, more preferably from 50 to 100 mass% based on the antistatic layer (100 mass%), from the viewpoint of the antistatic property.

The thickness of the antistatic layer may be suitably determined depending on applications. For example, when an antistatic layer having high transparency is to be formed, the thickness is preferably from 20 to 1,000 nm, more preferably from 30 to 300 nm, particularly preferably from 40 to 200 nm.

### FIRST PRIMER LAYER

Materials for the first primer layer may, for example, be an adhesive, a silane coupling agent, a resin material containing a silicon atom, etc.

The adhesive is preferably a visible photocurable resin, an epoxy adhesive, an acrylic adhesive or a urethane adhesive, and it is preferably an adhesive containing a cyanoacrylate or an epoxy resin from the viewpoint of low curing/shrinking properties and high transparency.

The silane coupling agent may be the following silane coupling agent.

A silane coupling agent having an amino group: 3-aminopropyl triethoxysilane, 3-aminopropyl methyl diethoxysilane, N-(2-aminoethyl)-3-aminopropyl trimethoxysilane, N-(2-aminoethyl)-3-aminopropyl methyl dimethoxysilane, etc.;
a silane coupling agent having an oxylanyl group: 3-glycidoxypropyl trimethoxysilane, 3-glycidoxypropyl methyldimethoxysilane, etc.;
a silane coupling agent of trichlorosilane: vinyl trichlorosilane, etc.; or
a silane coupling agent having other functional groups (a vinyl group, an acryloyloxy group, a methacryloyloxy group, an epoxy group, a styryl group, a fluoroalkyl group, a mercapto group, an isocyanate group, an ureido group, etc.).

The silane coupling agent is preferably a silane coupling agent having an amino group, a silane coupling agent having an oxiranyl group or a silane coupling agent of trichlorosilane.

The resin material containing a silicon atom may, for example, be a modified acrylic silicone resin, a resin containing a silsesquioxane skeleton, etc.

The thickness of the first primary layer is preferably from 0.02 to 25 µm, more preferably from 0.03 to 15 µm.

### SECOND PRIMER LAYER

Materials for the second primary layer may be a fluoropolymer having a reactive functional group, etc., preferably a fluorocyclic polymer having a reactive functional group, a fluoroalkylene polymer having a reactive functional group or a fluoropolyether polymer having a reactive functional group. Further, the fluoropolymer is particularly preferably the above perfluoropolymer (F1) having a reactive functional group.

The fluoropolymer having a reactive functional group may, for example, be a fluoropolymer having units derived from compounds (6-1) to (6-2); or a fluoropolymer having its terminal group derived from a polymerization initiator converted to a carboxy group.

CH₂=CHCOOCH₂CH(OH)CH₂(CF₂)₂CF(CH₃)₂ (6-1)

CF₂=CFCF₂C(CF₃) (OH)CH₂CH=CH₂ (6-2)

The thickness of the second primer layer is preferably from 0.03 to 5 µm, more preferably from 0.06 to 1 µm.

### PROCESS FOR PRODUCING MOLD

The process for producing a mold of the present invention comprises a step of forming a film comprising a fluoropolymer so as to cover the circumferential surface of a hollow cylindrical or solid cylindrical substrate thereby to obtain a mold precursor; and a step of rolling the mold precursor in such a state that the circumferential surface of the mold precursor is pushed against a surface of a heated original mold having a pattern reversed a pattern of a patterned layer, to transfer the reversal pattern of the original mold to the film containing a fluoropolymer.

The process for producing a mold of the present invention may be a process having the following steps (i) to (v).
(i) A step of forming the first primer layer so as to cover the circumferential surface of the substrate, as the case requires.
(ii) A step of forming the antistatic layer so as to cover the circumferential surface of the substrate or the surface of the first primer layer (namely, the circumferential surface side of the substrate), as the case requires.
(iii) A step of forming the second primary layer so as to cover the surface of the antistatic layer, as the case requires.
(iv) A step of forming a film comprising a fluoropolymer so as to cover the circumferential surface of the substrate, the surface of the antistatic layer or the surface of the second primer layer (namely, the circumferential surface side of the substrate) to obtain a mold precursor.
(v) A step of rolling the mold precursor in such a state that the circumferential surface of the mold precursor is pushed against a surface of a heated original mold by using the central axis of the hollow cylinder or solid cylinder as a rotational axis, to transfer the reversal pattern of the original mold to a film comprising a fluoropolymer to form a patterned layer.

Now, a case where the first primer layer, the antistatic layer and the second primer layer are provided, is described.

### STEP (i):

On the circumferential surface of the substrate, a solution containing the materials for the first primer layer is applied by coating, and the applied film is dried to form the first primer layer.

The coating method may, for example, be a casting method, a spin coating method, a spray coating method, a potting method or a bar coating method.

The drying method may, for example, be a heat drying method, a hot-air drying method, a vacuum drying method or a method of drying by leaving in an air stream.

### STEP (ii)

An antistatic agent is applied on a surface of the first primer layer, and the applied film is dried to form an antistatic layer.

The coating method may be the same method as in Step (i).

The drying method may be the same method as in Step (i).

When the antistatic agent contains a curable resin, after the applied film is dried, the curable resin is cured by heating or irradiation with ultraviolet rays. For irradiation of ultraviolet rays, an ultrahigh pressure mercury lamp, a high pressure mercury lamp, a low pressure mercury lamp, a carbon arc, a xenon arc, a metal halide lamp, etc. may be used.

As the method of forming the antistatic layer, it is possible to use a lamination method, a casting method, etc. instead of the coating method.

The antistatic agent may, for example, be a conductive compound or one containing a dispersant and a solvent.

As the antistatic agent, a commercialized antistatic agent may be used. The commercialized antistatic agent may, for example, be CONISOL manufactured by InsCon Tech Co., Ltd. or MU-003 manufactured by Muromachi Technos CO., Ltd.

The conductive compound may be the above-mentioned compound. The concentration of the conductive compound is preferably from 0.1 to 10 mass% based on the antistatic agent (100 mass%), and it is preferably from 0.4 to 5 mass% from the viewpoint of dispersibility and antistatic property.

The dispersant is preferably a dispersant having an anionic group. The anionic group may, for example, be a group having an acidic proton such as a carboxy group, a sulfonic group (a sulfo group), a phosphoric group (a phosphono group) or a sulfonamide group, or its salt, preferably a carboxy group, a sulfonic group or a phosphoric group, or its salt, particularly preferably a carboxy group or a phosphoric group. The number of anionic groups contained in the dispersant is at least one group on average per molecule, and from the viewpoint that the dispersibility of the conductive compound will further be improved, it is preferably at least two on average per molecule, more preferably at least five on average, particularly preferably at least 10 on average. The type of the anionic group to be contained in one molecule may be two types or more.

The dispersant having an anionic group may, for example, be Phosphanol (such as PE-510, PE-610, LB-400, EC-6103 or RE-410) manufactured by Toho Chemical Industry Co., Ltd., Disperbyk(-110, -111, -116, -140, -161, -162, -163, -164, -170, -171, etc. manufactured by BYK Japan K.K., ARONIX M5300, etc. manufactured by TOAGOSEI Co., Ltd. or KAYAMER (PM-21, PM-2, etc.) manufactured by Nippon Kayaku Co., Ltd.

The dispersant further preferably has a crosslinkable or polymerizable functional group. The crosslinkable or polymerizable functional group may, for example, be a radical-crosslinkable or polymerizable ethylenic unsaturated group (an acryloyl group, a methacryloyl group, an aryl group, a styryl group or a vinyloxy group), a cationic polymerizable group (such as an epoxy group, an oxatanyl group or a vinyloxy group) or a polycondensation reactive group (such as a hydrolysable silyl group or an N-methylol group), and an ethylenic unsaturated group is preferred.

The dispersant is particularly preferably an oligomer or a polymer having an anionic group and a crosslinkable or polymerizable functional group and having a crosslinkable or polymerizable functional group in its side chain. The mass average molecular weight (Mw) of the oligomer or polymer is preferably at least 1,000, more preferably from 2,000 to 1,000,000, further preferably from 5,000 to 200,000, particularly preferably from 10,000 to 100,000.

The amount of the dispersant to be added is preferably from 1 to 50 parts by mass, more preferably from 5 to 30 parts by mass, particularly preferably 5 to 20 parts by mass, per 100 parts by mass of the conductive compound.

The dispersants may be used alone or in combination as a mixture of two or more of them.

The solvent is preferably a liquid having a boiling point of from 60 to 170°C.

The solvent is preferably ethanol, isopropanol, toluene, xylene, methyl ethyl ketone, methyl isobutyl ketone, cyclohexanone or butanol, particularly preferably ethanol, isopropanol, methyl ethyl ketone, methyl isobutyl ketone, cyclohexanone or a solvent mixture of at least one of them with water.

The antistatic agent may further contain a binder from the viewpoint of adhesion with the substrate and mechanical strength. The binder may, for example, be a non-curable thermoplastic resin; or a curable resin such as a thermosetting resin or a photocurable resin, and the photocurable resin is particularly preferred from the viewpoint of adhesion.

The softening temperature or the glass transition point of the binder is preferably at least 50°C, more preferably at least 70°C, particularly preferably at least 100°C.

The photocurable resin is preferably one containing a polyfunctional monomer having at least two photopolymerizable groups in one molecule, more preferably one containing a polyfunctional monomer having at least three photopolymerizable groups in one molecule.

The photopolymerizable group may, for example, be a polymerizable group such as an epoxy group, a (meth)acryloyl group, a vinyl group, a styryl group or an allyl group, and a (meth)acryloyl group is preferred.

For the photocurable resin, the following monomers may be mentioned.

Neopentyl glycol acrylate, 1,6-hexanediol(meth)acrylate, propylene glycol di(meth)acrylate, etc.

Triethylene glycol di(meth)acrylate, dipropylene glycol di(meth)acrylate, polyethylene glycol di(meth)acrylate, polypropylene glycol di(meth)acrylate, etc.

Pentaerythritol di(meth)acrylate, etc.

2,2-bis[4-(Acryloxy/diethoxy)phenyl]propane, etc.

Trimethylolpropane tri(meth)acrylate, trimethylolethane tri(meth)acrylate, 1,2,4-cyclohexane tetra(meth)acrylate, pentaglycerol triacrylate, pentaerythritol tetra(meth)acrylate, pentaerythritol tri(meth)acrylate, dipentaerythritol triacrylate, dipentaerythritol pentaacrylate, dipentaerythritol tetra(meth)acrylate, dipentaerythritol hexa(meth)acrylate, tripentaerythritol triacrylate, tripentaerythritol hexatriacrylate, etc.

The polyfunctional monomers may be used alone or in combination as a two or more of them.

The photocurable resin preferably contains a photopolymerization initiator. The photopolymerization initiator is preferably a photoradical polymerization initiator or a photocationic polymerization initiator, particularly preferably a photoradical polymerization initiator.

The antistatic agent is prepared by dispersing the conductive compound in a solvent in the presence of the dispersant.

When the conductive compound is dispersed in a solvent, it is preferred to use a disperser. The disperser may, for example, be a sand grinder mill (such as a beads mill equipped with a pin), a Dynomil, a rapid impeller mill, an Eiger mill, a pebble mill, a roller mill, an Attritor or a colloid mild, particularly preferably a media disperser such as a sand grinder mill or a Dynomil.

Before the conductive compound is dispersed in a solvent, a preliminary dispersion treatment may be carried out. A disperser to be used for the preliminary dispersion treatment may, for example, be a ball mill, a triple roll mill, a kneader or an extruder.

### STEP (iii):

On the surface of the antistatic layer, a solution wherein a fluoropolymer having a reactive functional group is dissolved in a solvent, is applied by coating, and the applied film is dried to form the second primer layer.

The solvent may, for example, be a fluorosolvent such as perfluorotributylamine, pentafluorobenzene, hexafluorometaxylene or hydrofluoroether.

The coating method may be the same method as in Step (i).

The drying method may be the same method as in Step (i). The drying temperature is preferably from 40 to 200°C.

### STEP (iv):

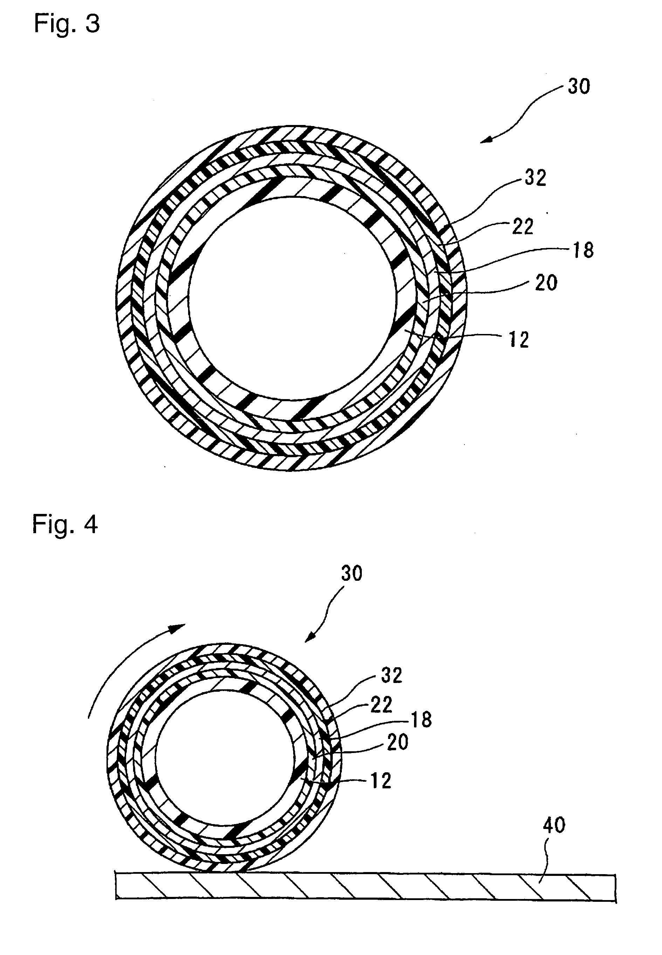

As shown in Fig. 3, on the surface of second primer 22, a solution having a fluoropolymer dissolved in a solvent, is applied by coating, and the applied film is dried to form a film 32 comprising a fluoropolymer thereby to obtain a mold precursor 30.

The solvent may be a solvent exemplified in Step (iii).

The coating method may be the same method as in Step (i).

The drying method may be the same method as in Step (i). The drying temperature is the same temperature as in Step (iii).

Instead of the solution having a fluoropolymer dissolved in a solvent, it is possible to use a photocurable or thermosetting fluoromonomer.

In order to control the releasing property of the film 32 comprising a fluoropolymer, surface treatment such as plasma treatment, corona discharging, ultraviolet irradiation, vacuum ultraviolet irradiation electron beam irradiation, ultraviolet ozone treatment or ion irradiation, may be applied to the surface of the film 32 comprising a fluoropolymer.

### STEP (v):

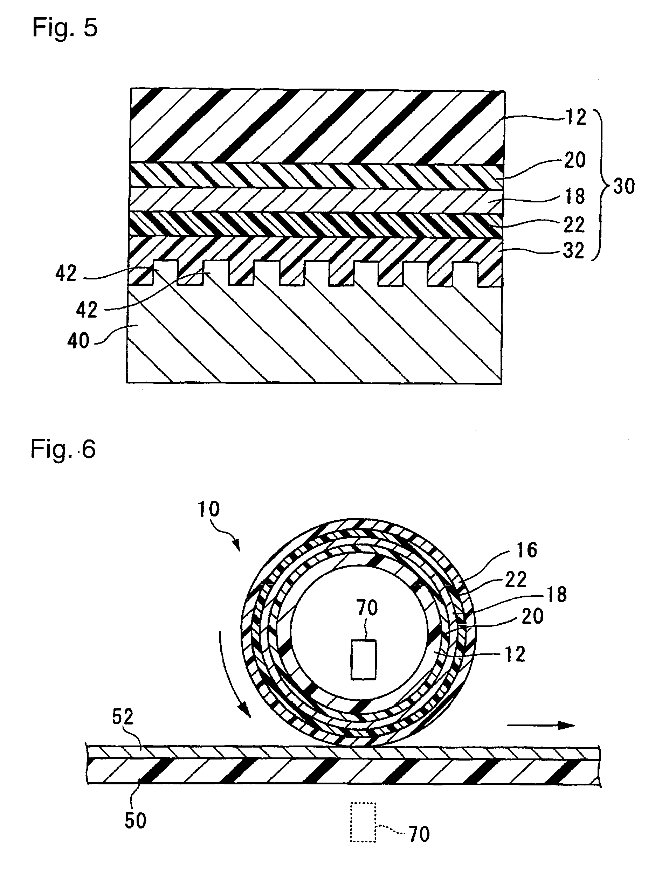

As shown in Fig. 4, the mold precursor 30 is rolled on a surface of a heated original mold 40 in such a state that the circumferential surface of the mold precursor 30 is pushed against the surface of a heated original mold 40; as shown in Fig. 5, a reversal pattern 42 of the original mold 40 is transferred to the film 32 comprising a fluoropolymer to form a patterned layer 16 thereby to obtain a mold 10 as shown in Fig. 1 and Fig. 2.

The material of the original mold 40 may, for example, be silicon, glass, metal or resin.

The method for forming the reversal pattern 42 on the original mold 40 may, for example, be photolithography, electron lithography, X-ray lithography, cutting processing, laser beam processing, ultrasonic processing or a self-organization method such as an anodic oxidation.

The pressure (gauge pressure) during the original mold 40 is pushed against the film 32 comprising a fluoropolymer, is preferably from 0 to at most 10 MPa.

The temperature of the original mold 40 may be suitably determined depending on the type of the fluoropolymer.

### PROCESS FOR FORMING FINE PATTERN

The process for forming a fine pattern by using the mold obtained by the production process of the present invention may be the following process.
(a) A process for forming a desired fine pattern on a film made of a liquid photocurable resin formed on a support substrate, wherein the photocurable resin is irradiated with light to cure the photocurable resin in a state where the patterned layer of the mold is pushed against the film.
(b) A process for forming a desired fine pattern,
   wherein a liquid photocurable resin is supplied on the surface of the patterned layer of the mold, and the photocurable resin is transferred on a support substrate and at the same time, the photocurable resin is irradiated with light to be cured.

The process (a) may, for example, be the following process.

As shown in Fig. 6, it is a process wherein the film 52 made of a liquid photocurable resin and formed on the belt-like support substrate 50 moving in a predetermined direction, and the hollow cylindrical or solid cylindrical mold 10, the synchronized with the moving rate of the support substrate 50 and are continuously contacted to each other by rotating the mold 10; the photocurable resin is irradiated with light from a light source 70 to cure the photocurable resin, in a state where the patterned layer 16 of the mold 10 is pushed against the film 52 made of the photocurable resin, or after the mold 10 is separated from the photocurable resin, thereby to form a fine pattern (not shown) reverse to the pattern (not shown) of the patterned layer 16.

The process (b) may, for example, be the following process.

It is a process wherein a liquid photocurable resin is supplied on the surface of the patterned layer of a hollow cylindrical or solid cylindrical mold, and the belt-like support substrate moving in a predetermined direction and the hollow cylindrical or solid cylindrical mold are synchronized with the moving rate of the support substrate and are continuously contacted to each other by rotating the hollow cylindrical or solid cylindrical mold; and at the same time as the photocurable resin is transferred on the support substrate or after the photocurable resin is so transferred, the photocurable resin is irradiated with light from the light source to cure the photocurable resin, thereby to form a desired fine pattern.

When a mold is made of a light-transmitting material, curing the photocurable resin is carried out by irradiating light to the photocurable resin from the mold side. When the support substrate is made of a light-transmitting material, the photocurable resin may be irradiated with light from the support substrate side. Further, curing by heating may be combined.

As the light source for light irradiation, a high pressure mercury lamp, etc. may be used. As the light, ultraviolet rays or visible light may be used.

The shape of the support substrate may, for example, be a film or a sheet-form, a plate-form, a hollow cylindrical-form, a solid cylindrical-form, etc.

The material of the support substrate may, for example, be a resin, glass, a metal or a cellulose material.

The photocurable resin may be a known photocurable resin which can be cured by visible light or ultraviolet rays.

The article wherein a fine pattern is to be formed by using the mold of the present invention may be the following article.

Optical element: A microlens array, an optical waveguide, an optical switching, a Fresnel zone plate, a wire grid, a wavelength filter, a polarizing plate, a binary element, a blaze element, a photonix crystal, a antireflection film, a member satisfying the antireflection structure, etc.

A chip: A biochip, a chip for µ-TAS (Micro-Total Analysis Systems), a microreactor chip, etc.

Recording media: An optical disk, etc.

A display material: A rib, etc.

An energy association: A fuel cell, a three-dimensional cell, a capacitor, a Peltier element, a solar cell, etc.

A semiconductor association: MEMS (Micro-ElectroMechanical-System), a semiconductor device, etc.

Others: A catalyst carrier, a filter, a sensor member, super water repellent material.

By the above-described process for producing a mold of the present invention, it is possible to produce a hollow cylindrical or solid cylindrical mold comprising a seamless patterned layer comprising a fluoropolymer, since after a film comprising the fluoropolymer is formed so as to cover the circumferential surface of a substrate, a patterned layer is formed by transferring the reversal pattern of the original mold to the film comprising a fluoropolymer.

Further, when an antistatic layer is formed on the substrate before the film comprising a fluoropolymer (a patterned layer-to-be layer) is formed, impurities such as dusts will not be adhered on the film comprising a fluoropolymer, and defects derived from the impurities will not be formed in the patterned layer.

### EXAMPLE

Now, the present invention will be described in further detail with reference to Example, but it should be understood that the present invention is by no means restricted thereto.

In Example of the present invention, the surface resistance was measured by using a surface resistance meter (HIRESTA MCP-HTP16 manufactured by Mitsubishi Chemical Corporation) at an applied voltage of 1,000 V.

The contact angle of water was measured by using a contact angle meter (CA-X150 type, manufactured by Kyowa Interface Science Co., Ltd.) and by dropping a water droplet of about 20 µL.

### SYNTHESIS EXAMPLE 1

Into a glass autoclave, 100 g of CF₂=CFOCF₂CF₂CF=CF₂ as a diene monomer, 0.5 of methanol as a chain transfer agent and 0.7 g of ((CH₃)₂CHOCOO)₂ as a polymerization initiator, were introduced and cyclopolymerized by a suspension polymerization method to obtain a polymer A which is a fluorocyclopolymer and also a perfluoropolymer (F). The intrinsic viscosity [η] of the polymer A was 0.34 dL/g in perfluoro(2-butyltetrahydrofuran) at 30°C.

The polymer A was heat-treated in a circulating hot air oven at 300°C for 1 hour in the air, and then, the functional groups of molecular terminals were treated by impregnation in ultrapure water at 110°C for 1 week, followed by drying in a vacuum dryer at 100°C for 24 hours to obtain a polymer A1 as a perfluoropolymer (F1). In the IR spectrum of the polymer A1, there was a peak belonged to a carboxy group. Further, the light transmittance at a wavelength of from 400 to 2,000 nm was at least 95% with the thickness of 100 µm. The fluorine content of the polymer A1 was 67 mass% in the polymer A1 (100 mass%). The contact angle of water with a film made of the polymer A1 was 101°.

### SYNTHESIS EXAMPLE 2

Into a 1L stainless steel autoclave, 5 g of the polymer A1 was introduced, and after the inside of the autoclave was flushed for 3 times with nitrogen, the pressure was reduced to 4 KPa. Then, a fluorine gas diluted to 14 vol% with nitrogen was introduced in the autoclave until 101 KPa, and fluorination treatment was carried out at 230°C for 6 hours to obtain 5 g of a polymer A2 as a perfluoropolymer (F2). In the IR spectrum of the polymer A2, there was no peak showing e.g. a hydrocarbon group or a carboxy group of a molecular terminal derived from a polymerization initiator. The fluorine content of the polymer A2 was 68 mass% in the polymer A2 (100 mass%). The contact angle of water with a film made of the polymer A2 was 116°.

### EXAMPLE 1

An antistatic agent (CONISOL F205 manufactured by TA Chemical Co., Ltd.) is diluted by 5 times in a solvent mixture of water/isopropanol (1/7 mass ratio) to prepare an antistatic agent for coating. The antistatic agent is applied on the circumferential surface of an acrylic resin pipe (1.8 mm in thickness, 30 mm in diameter and 150 mm in length) by rotating the pipe at a rate of 120 rpm by a spray coating method, followed by drying with a dryer to form an antistatic layer. The surface resistance of the antistatic layer is 10⁹ Ω/□.

The polymer A1 is dissolved in perfluorotributylamine to prepare a 1 mass% solution of the polymer A1, and the solution is filtrated by a polytetrafluoroethylene (PEFE) membrane filter having a pore diameter of 0.2 µm. The solution is applied on a surface of the antistatic layer by rotating the pipe at a rate of 120 rpm by a spray coating method for 1 minute, followed by drying with a dryer to form a second primer layer.

The polymer A2 is dissolved in perfluorotributylamine to prepare a 5 mass% solution of the polymer A2, and the solution is filtrated by a PEFE membrane filter having a pore diameter of 0.2 µm. The solution is applied on the second primer layer by rotating the pipe at a rate of 120 rpm by a spray coating method for 2 minutes, followed by drying with a dryer. When the surface of a film made of the polymer A2 stops flowing, the pipe is put into a dryer and is dried at 140°C for 2 hours to obtain a hollow cylindrical mold precursor. The total thickness of the film comprising the antistatic layer, the second primer layer and the polymer A2 is about 1 µm.

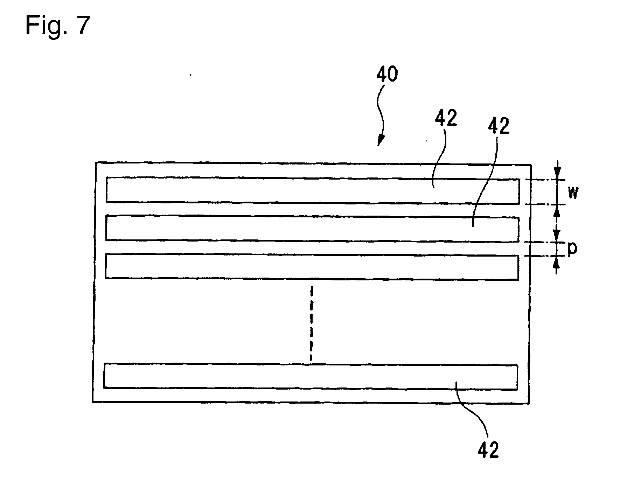

A 5 cm x 10 cm nickel original mold is prepared. On a surface of the original mold, as shown in Fig. 7, a number of convexes (reversal pattern 42) expanding in a longitudinal direction of the original mold 40 are formed in parallel. The width w of a convex is 100 µm, the distance p between adjacent convexes is 50 µm, and the height of a convex is 50 µm.

The original mold is heated to 150°C, and then, the mold precursor is rolled on the original mold in a state where the circumferential surface of the mold precursor is pushed against the surface of the original mold with a pressure of about 1.0 MPa at a rotational speed of 1 rpm in a longitudinal direction; on the film made of the polymer A2 of the mold precursor, a pattern reverse to convexes of the original mold is formed to obtain a hollow cylindrical mold M1 having a seamless patterned layer. The surface resistance of the patterned layer is 10¹³ Ω/□.

In a clean room where ultraviolet rays are shut out, into a 6 mL vial container, 1.31 g of CF₂=CFCF₂C(CF₃)(OCH₂OCH₃)CH₂CH=CH₂, 0.14 g of CF₂=CFCF₂C(CF₃)(OH)CH₂CH=CH₂ and 0.06 g of a photoradical polymerization initiator (IRGACURE 651 manufactured by Ciba Specialty Chemicals) are introduced and thoroughly mixed to prepare a photocurable resin.

The photocurable resin is supplied to an easy-adhesive surface of a PET film (A4100 manufactured by Toyobo Co., Ltd., thickness: 100 µm) having 25 cm x 12 cm by a Die Coater to form a film made of the photocurable resin.

While the mold M1 is rolled on a film made of the photocurable resin at a rotational speed of 1 rpm and in a state where the mold is pushed against the film at room temperature with a pressure of about 0.1 MPa, the photocurable resin is irradiated with ultraviolet rays (illuminance: 252 mW/cm² at a wavelength of 365 nm) from the light source from the PET film side to cure the photocurable resin, thereby to form a fine pattern reverse to the pattern of the patterned layer, on the PET film.

### INDUSTRIAL APPLICABILITY

The mold obtained by the production process of the present invention is useful as a mold to be used for a nano imprinting method. Further, it can also be used as a mold to be used for mold-processing a photocurable resin, a mold to be used for printing such as a screen printing or a gravure printing, or a mold for a 2P molding method.

The entire disclosure of Japanese Patent Application No. 2006-211906 filed on August 3, 2006 including specification, claims, drawings and summary is incorporated herein by reference in its entirety.

## Claims

1. A process for producing a mold comprising a hollow cylindrical or solid cylindrical substrate and a patterned layer comprising a fluoropolymer and having a pattern formed on its surface, which comprises a step of forming a film comprising a fluoropolymer so as to cover the circumferential surface of the hollow cylindrical or solid cylindrical substrate thereby to obtain a mold precursor; and a step of rolling the mold precursor in such a state that the circumferential surface of the mold precursor is pushed against a surface of a heated original mold having a pattern reverse to the pattern of the patterned layer, to transfer the reversal pattern of the original mold to the film comprising a fluoropolymer to form the patterned layer.

2. The process for producing a mold according to Claim 1, which has a step of forming an antistatic layer so as to cover the circumferential surface of the substrate before the film comprising a fluoropolymer is formed.

3. The process for producing a mold according to Claim 2, which has a step of forming a first primer layer so as to cover the circumferential surface of the substrate before the antistatic layer is formed.

4. The process for producing a mold according to Claim 2 or 3, which has a step of forming a second primer layer so as to cover the antistatic layer.

5. The process for producing a mold according to any one of Claims 1 to 4, wherein the fluoropolymer is a fluorocyclic polymer or a fluoropolyether polymer.

6. The process for producing a mold according to Claim 5, wherein the fluoropolymer has a fluoroalicyclic structure in its main chain.

7. The process for producing a mold according to any one of Claims 1 to 6, wherein the fluoropolymer is a perfluoropolymer, wherein the ratio of the number of fluorine atoms bonded to carbon atoms to the total number of hydrogen atoms bonded to carbon atoms and fluorine atoms bonded to carbon atoms, is 100%.

8. The process for producing a mold according to any one of Claims 1 to 7, wherein the film comprising a fluoropolymer is formed by applying a solution having a fluoropolymer dissolved in a solvent, and drying the applied film.

9. A mold produced by the process for producing a mold as defined in any one of Claims 1 to 8.

10. A process for forming a desired fine pattern on a film made of a liquid photocurable resin formed on a base, wherein the photocurable resin is irradiated with light to cure the photocurable resin in a state where the patterned layer of the mold as defined in Claim 9, is pushed against the film.
